# EUROPEAN PATENT APPLICATION

(11) **EP 3 733 355 A1**
(43) Date of publication of application: **04.11.2020**
(21) Application number: 20172501.7
(22) Date of filing: 30.04.2020
(51) Int. Cl.: B25J 9/16

(54) **ROBOT MOTION OPTIMIZATION SYSTEM AND METHOD**

(30) Priority: 01.05.2019 GB 201906140
(71) Applicant: Arrival Limited, London W14 8TS (GB)
(72) Inventor: STREZHIK, Yuriy, London, W14 8TS (GB); AZIZOV, Rustem, London, W14 8TS (GB); TALYH, Vitaly, London, W14 8TS (GB)
(74) Representative: Korenberg, Alexander Tal

(57) **Abstract**

A trajectory optimization system and method for robot cells includes cameras, robots, operated objects, a robot planner, a motion optimizer and a robot controller. The motion planner produces a plurality of motion scripts for an assembly scenario. The motion optimizer runs each of the plurality of motion scripts on a virtual, simulated robotic environment and determines the optimum motion script based upon criteria values associated with robotic performance. If errors are detected, the motion optimizer can correct the assembly scenario and request a revised list of motion scripts. The error free optimized motion script is run by the robot controller which generates control signals for the real robot environment.

## Description

### Field

The field of disclosure is the physical operation of a robotized manufacturing system.

### Background

In robotic manufacturing systems, robots perform various technological operations on objects and assemblies such as grabbing, welding, handling, assembling etc. Most of the robotic operations are related to holding and relocation of an operated object. The robotic operations, paths, movements, and trajectories of the operated objects are implemented using robot control planning software. For most object operations, there are a plurality of optional trajectories. However, the robot control planning software may only provide the same movements based upon the operation being performed. The robot control planning software may not provide robotic operation optimization based upon variations in the objects. What is needed is an improved system which can analyze the paths, movements, and trajectories of objects and determine optimized robotic movement processing based upon performance criteria.

### Summary

The present disclosure is directed towards a system and method for automation of the optimization of the robot motion paths in the robotic cell. The basic processing by a robot on an operated object can be described in an assembly scenario. The system provides optimization of the process of tuning robotic cell environments and assures precise positioning of the robots and operated object processing.

The robot motion optimization system includes a motion planner which is a software module running on a processor. The motion planner can interpret the assembly scenario and based upon this information generate a plurality of motion scripts for technological operations of a robot on an operated object having a specific weight. The plurality of motion scripts are transmitted from the motion planner to a motion optimizer which can execute the plurality of motion scripts in a virtual environment having a virtual robot and a virtual operated object which simulates the operation of a real robot processing the real object. The motion optimizer can determine criteria values for each of the plurality of motion scripts and select an optimized motion script based upon a set of criteria values. The criteria for an optimal motion plan could be accuracy, speed, cost, or power efficiency. Various metrics could be used for understanding the criteria for optimization.

The optimal motion script is transmitted from the motion optimizer to a robot control system having a robot controller. The robot controller can run the optimal motion script and transmits control signals to the robot in the real controlled environment. The real robot is operated with the control signals to process the real object.

Throughout the described process, errors or changes to the motion scripts can be requested. For example, if an error is detected by the motion optimizer based upon errors in the movement of the virtual robot or processing of the virtual operated object in the simulated virtual environment, the motion optimizer can transmit a request for corrections to the assembly scenario to the motion planner. Similarly, if an error is detected by the robot control system based upon errors in the movement of the real robot or processing of the real operated object in the real robot environment, the robot control system can transmit a request for corrections to the assembly scenario to the motion planner. The motion planner can respond to these correction requests by producing a plurality of revised motion scripts which correct the processing errors.

The optimization system has various benefits. The disclosure decreases the time required for positioning parameter alignment within real and virtual robot environments, and minimizes work required for accurate tuning of movement scripts for robot cells. The system and method can be implemented in real-time, during robotic manufacturing processes. The disclosure increases the safety of the performed robotic operations because the movement scripts are first run in a simulated virtual robotic cell. The system is scalable and allows the optimization of local operations with a small number of robots as well as larger operations with multiple robots performing various tasks for a whole technological process. The system and method can increase the power efficiency of robotic manufacturing processes. The disclosure is applicable for any robotic environment of manufacturing objects, which might be simulated in a virtual robotic environment. The system and method increase robotized production line effectiveness and decrease production cost ($/unit) via an automated computer to process and generate optimized movement scripts and eliminate human involvement.

### Brief Description of the Drawings

FIG. 1 illustrates an embodiment of a robotic cell scene.
FIG. 2 illustrates an example of G-codes which includes coordinates for a robot arm.
FIG. 3 illustrates an exemplary listing of JavaScript Object Notation (JSON) which includes coordinates for a robot arm.
FIG. 4 illustrates a coordinate system with a robot arm.
FIG. 5 illustrates an embodiment of a block diagram showing components of a robot optimization system.
FIG. 6 illustrates an object movement requirement of an operated object by a robot arm.
FIG. 7 illustrates a real movement of an operated object by a robot arm with a movement error.
FIG. 8 illustrates an embodiment of a robotic cell scene with location markers.
FIG. 9 illustrates an example of an ArUco marker.
FIG. 10 illustrates an embodiment of a computing device and a mobile computing device used to control of the process.

### Detailed Description

The present disclosure is directed towards a system and method for optimizing the movements and trajectories of operated objects being moved and manipulated by robots. The optimization can be based upon various criteria such as accuracy, speed, energy efficiency, and manufacturing costs. The optimum robotic processing can be based upon the operated objects being processed. For example, operated objects having different shapes, dimensions and weights can have different optimized robotic movements for the same basic robotic processing. A robot can process a light weight operated object in a simple manner with fast movements and linear trajectories. However, a different robotic movement may be necessary to process heavier operated objects with the same speed and trajectories. The system can estimate and measure differences in performance of different robot trajectories based upon one or more performance criteria such as accuracy, speed, cost of manufacturing, etc.

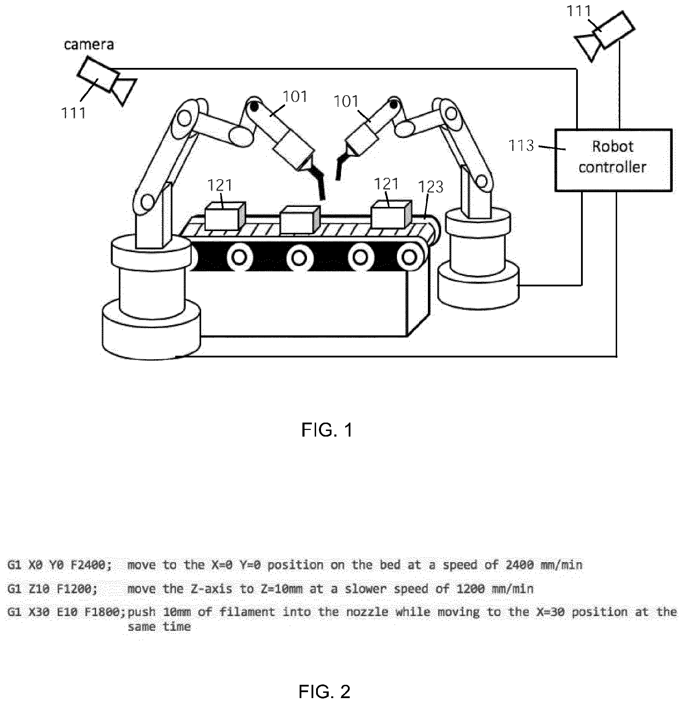

FIG. 1 illustrates an embodiment of a real robotic environment. In this example, the robotic cell can include robot arms 101 which perform operations on objects 121 placed on a moving conveyor belt 123. The programming robot controller 113 is the computing unit that executes the program of the robot 101 operations during the manufacturing process. The programming robot controller 113 is also coupled to cameras 111.

The coordinate system defines a reference position and orientation from which all robot positions can be measured. In an embodiment, the system can use a base coordinate system which defines a common reference point for a cell or application. A defined base coordinate system is useful when using multiple robots or devices because the relative positions of all robots and devices are defined in a common coordinate system.

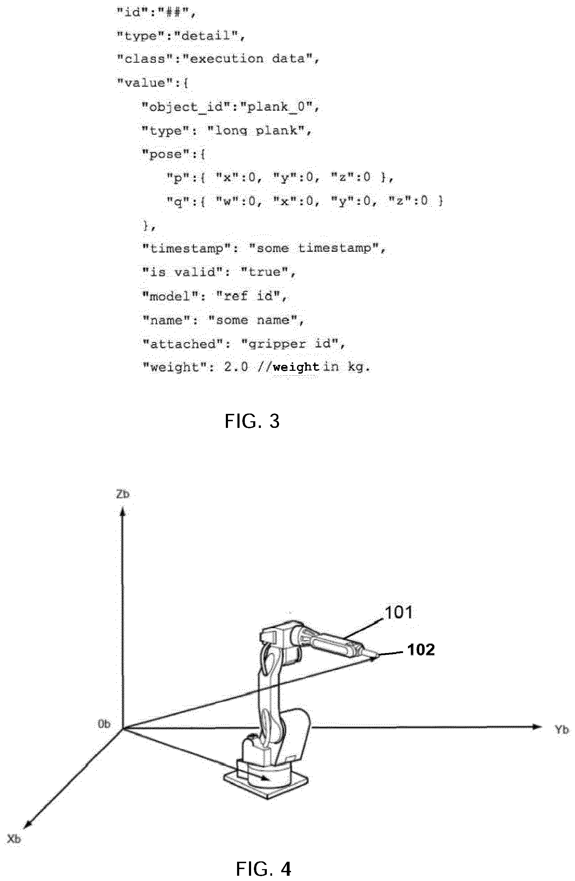

In general, G-codes are used by the robot controller 113 to control the robot arms 101 movements. FIG. 2 illustrates an example of G-codes used to control a robot arm. The exact coordinates of a robot, such as a robot arm position, can be hardcoded into the G-code program, and the same hardcoded values are used for any object orientation on the scene. FIG. 3 illustrates an exemplary listing of JavaScript Object Notation (JSON) which shows the module, detail, and object description data structure, where quaternion coordinates of the position are set. In this example, the object ID is "plank_0" and "pose" defines the 3D position "p" as x:0, y:0, and z:0 and angular orientation "q" as w:0, x:0, y:0, and z:0. The example JSON also specifies that weight: 2.0 (weight in kg).

With reference to FIG. 4, an example of a robot arm 101 in a base coordinate system is illustrated. The location and angular orientation of the tool 102 on the end of the robot arm 101 can be defined by position (X, Y, Z) and angular orientation (RW, RX, RY, RZ). These same coordinates can be applied to all other robots and operated objects in the robot cell. Further, the static distances and orientation relationships between the operated objects and the robots in the robot cells can be precisely calibrated before robot operations on the objects commence.

Once a robot cell base coordinate system has been established, the robot processing of an operated object can be analyzed, and optimized operations can be determined. The robot control system can analyze variables in the robot cell to determine optimization. For example, the weight and shape of an operated object being processed can be analyzed. A robot movement trajectory for an operated object weighing 10 kg may not have the same robotic trajectory as a similarly shaped operated object that weighs 100 kg. The relatively heavy weight of the latter operated object leads to a high inertia in a real robot environment, which is very hard to accurately predict using calculations in motion planning algorithms. The same robotic manufacturing operation, such as assembly, inserting or shifting, for different loads may be performed by different optimized robotic movements. Objects having different weights and materials may need to be treated differently for optimized performance. For example, a 10 kg plastic object can be optimally processed differently than a 100 kg iron object. The trajectory optimization may not be considered by prior art robot movement planning tools, resulting in errors and inefficiency. These variations in weight and material can occur for various reasons. In modern robotized factories, the robotic processing of operated objects might change over time, and robotic factories with the system can provide a high degree of flexibility of manufacturing.

The variation of the operated object load weights might not be critical for robotic processing when the robot speeds are not high. However, the efficiency of the manufacturing is estimated as a created unit of product processed per unit of time, such as parts per minute. Thus, for optimized operations, most robotic factories will demand a fast as possible and sustainable production cycle for every robotic operation. With faster robotic operations and movement speeds, the weight of the load might cause unpredicted dangerous situations. For example, a fast stop at the final point of the trajectory can result in very high forces where force equals mass times deceleration. This trajectory might cause the robot carried object to move further, slide, or lean the holder further than planned. The operated object orientation relative to the robot gripper may also change. For example, forces applied to the object during the rapid deceleration may cause the operated object to swing like a pendulum if the object is held at the top by the robot. Similarly, if a heavy object is rapidly moved by a robot arm in a curved path, the centripetal force may cause the operated object to shift in the robot gripper, causing the operated object to go outside of an allowed movement path corridor. This can result in object processing errors such as the operated object hitting other objects or breaking the part or robotic equipment. Thus, while high speeds can be desirable for improved output, proper speeds of each elementary robot movement carrying the operated object must be controlled to prevent processing errors and potential damage. A balance between quick and safe operations must be considered, while planning the optimized robotic work.

Another problem with robotic motion planning tools is that they may not consider the power efficiency criteria. A robot such as a robotic arm can have several joints, which allows the robot to move, grasp and manipulate objects. In an embodiment, the system can determine the power requirements for a plurality of different object movement trajectories or operations. For example, a task of moving an operated object from one point to another could follow many different movement path trajectories and velocities. The difference in the physical work performed by the robot and the electrical power energy required for this task might differ significantly based upon the different trajectories. Since the robot might perform thousands of operations daily, an inefficient or suboptimal robot trajectory might lead to significant energy losses.

The system can analyze performance criteria for each of the plurality of different robot movements and then identify an optimal movement based upon the desired performance criteria. For example, the system can identify the optimized movements based upon criteria such as accuracy, speed, and energy consumption. This optimization can be extended to energy costs. For example, the system may adjust the movements and speeds of the robots based upon cumulative electrical power requirements of the factory. The system can know the existing loads on the power grid and avoid high power operations which exceed the maximum electrical power available.

The system could be considered as an addition or enhancement to the conventional monitoring solutions, used in robotic production assembly lines and in other embodiments. The system could be used for other applications where a physical process in conjunction with its simulation is available. The system provides a solution for accurate modeling of the production environment. For example, the system could be used in product assembly workshop, which might contain a number of robotic cells, robotic transporters, and operated objects. For simplicity, the illustrated examples are applied to a single robotic cell.

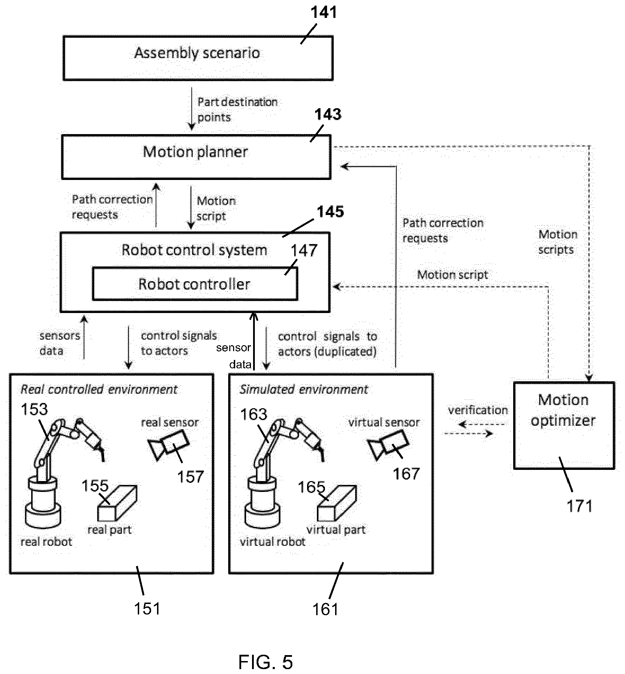

With reference to FIG. 5, an embodiment of a block diagram showing components of a robot optimization system is illustrated. As discussed above, the robotic cell can include both a real environment and a matching virtual environment, with general robots, objects, cameras and tooling installed. The processing of the operated object can be described in an assembly scenario 141. The operated object movement requirements can be object source and destination points which are defined by the coordinate system. The technological operations are described in some form and the combination of the technological operations make up the assembly scenario. The object movement requirements can specify certain operational characteristics of the robot cell, such as the type of robot and tools on the robot, and the weight and physical geometry of the operated object. To improve the accuracy of the movement, the role of conventional motion planners can be modified. For example, the motion planner 143 can create motion scripts for all reachable trajectories. These trajectories can include generic and/or random combinations of the robot and part motions that could be calculated, and motion scripts for best-practice trajectories for operated objects can be generated by the motion planner 143. Each of the motion scripts from the motion planner 143 can have a different object trajectory and/ or speed of movement. At run time, or in some cases ahead of run time, the entities of the assembly scenario 141 are translated into a plurality of motion scripts by the motion planner 143.

The list of motion scripts is passed to the motion optimizer 171 which can be a software module running on a processor. The motion optimizer 171 performs re-play of all motion scripts in the list in a virtual environment. In different embodiments there can be several parallel processors executing each of the motion scripts in virtual environments to quicken the processing of all the motion scripts. The simulations of the robot 163 movements can take into account the physical properties of the processes like weights of the operated object 165, the inertia effects of the operated object 165, and the weight and inertia of the robot 163.

The system provides trajectory optimization for improved factory processing performance. The object trajectory optimization can be performed by a motion optimizer 171. The motion optimizer 171 can include virtual robot cells which can run each of the different motion scripts from the motion planner 143. The motion optimizer 171 can select an optimum motion script based upon various performance criteria such as processing accuracy, speed, and cost.

The motion optimizer 171 can analyze the performances of the motion scripts and determine an optimized motion script based upon a user selected criteria. A plurality of performance criteria could be used for optimization. Expected accuracy can be based upon the predicted accuracy of the virtual robot 163 processing the virtual operated object 165. Speed can be based upon the predicted time for completing the processing of the virtual operated object 165 by the virtual robot 163. The cost or efficiency can be determined by the predicted power consumption of the real robot 153. Since the virtual robot 163 and the real robot 153 report all the electrical currents going through the robot joint motors, the peak power needed and the whole energy consumption during the robot movement carrying the operated object can be determined by the simulator virtual environment 161, and the actual power consumption can be determined by the real robot environment 151. The motion optimizer 171 selects the most appropriate motion script plan for the robot and passes the motion script to the robot control system 145 which can be a software module running on a processor. In an embodiment, the motion optimizer 171 could receive information from a user interface which displays user options to select the optimization criteria. In other embodiments, the optimized script for optimal trajectory selection can be identified through an artificial intelligence algorithm or machine learning. There can also be embodiments where the motion script optimization criteria changes over time.

The optimal motion script can depend upon the robots in the scenario. For example, a simple single robot cell might have an optimized motion script estimated for single robot operation. However, for more complex robot systems, the optimized motion script can be estimated for multiple coordinated robot operations. The optimized motion script can also be estimated for multiple coordinated robot cells which each perform a different operation on product parts. In this manner, the same optimization process can be applied to the whole technological process scenario of the product manufacturing. The results and the statistics taken from the motion optimizer 171, could significantly change the technological process at a particular factory.

As discussed, the motion optimizer 171 can run the list of motion scripts on the simulated virtual environment 161 and determine performance characteristics for each of the motion scripts. With reference to Table 1 below, simplified test results for an example list of motion scripts are recorded.

**TABLE 1**

| Motion Script | Accuracy | Speed | Cost/Part |
|---|---|---|---|
| 1 | 91% | 4 sec | $ 0.010 |
| 2 | 96% | 5 sec | $ 0.042 |
| 3 | 77% | 3 sec | $ 0.009 |
| 4 | 98% | 8 sec | $ 0.051 |
| 5 | 93% | 3 sec | $ 0.014 |

In the illustrated example, the required accuracy may need to exceed 90% and based upon this accuracy requirement, the motion optimizer 171 can eliminate motion script 3 while motion scripts 1, 2, 4 and 5 are acceptable. If the motion optimizer 171 is using fastest speed as the desired performance criteria, then motion script 5 can be determined as the optimized motion script. If the lowest cost/part is the desired performance criteria, then motion script 1 can be determined as the optimized motion script.

The module robot control system 145 can include the robot controller 147 which can run the motion scripts and transmit robot control signals associated with the motion scripts to a real controlled robot cell environment 151 and a virtual robot cell environment 161. The real controlled robot cell environment includes a real robot 153, a real object 155 and real sensor 157. The virtual robot cell environment 161 includes a virtual robot 163, a virtual operated object 165 and a virtual sensor 167 that correspond to the components in the real controlled robot cell environment 151. The robot control system 145 transfers the optimized motion script to the real robot 153 in the real controlled robot cell environment 151.

The sensor information from the real sensor 157 is passed back to the robot control system 145 which configures the virtual robot cell environment 161. The robot cell environment 161 can be configured using the virtual sensor 167 data and/or the real sensor 157 data. The virtual robot cell environment 161 can also function to compare the real sensor 157 data to the virtual sensor 167 data. If there are differences in the data from the real sensor 157 and the virtual sensor 167 for the real and virtual robot processing of objects, an error in the simulation may be detected. The virtual robot cell environment 161 can generate changes in the virtual environment 161 scenario as needed. Robot positioning errors (deviations) are calculated using parameters, taken from the real robot (joints' positions) and the same from the simulator. If needed, the coordinate system transformations are performed.

Changes in the virtual environment 161 might be needed when unexpected situations happen, such as: object failure, breakage of objects/equipment, malfunctioning of equipment, etc. The robot control system 145 may also need to correct the current robot movements and may issue corresponding requests to the motion planner 143. In such cases, the virtual robot cell environment 161 can request from standard motion planner 143 to re-generate the list of possible motion scripts according to the corrected assembling scenario and repeat the described motion script optimization process in the same manner described above.

The robot controller 147 transmits control signals to the real robot 153 in the real controlled environment 151 and/or a corresponding virtual robot 163 in the simulated virtual environment 161. The real robot 153 and/or virtual robot 163 perform movements according to the control signals, received from the robot controller 147. The simulated virtual environment 161 can contain a number of different software modules running on a processor, which perform different tasks, including real-time analysis of the sensor data and control of the assembling process. The robot controller 147 is able to receive and use data such as sensor data from both the real sensors 157 in the real environment 151 and the virtual sensor 167 in the virtual simulated environment 161.

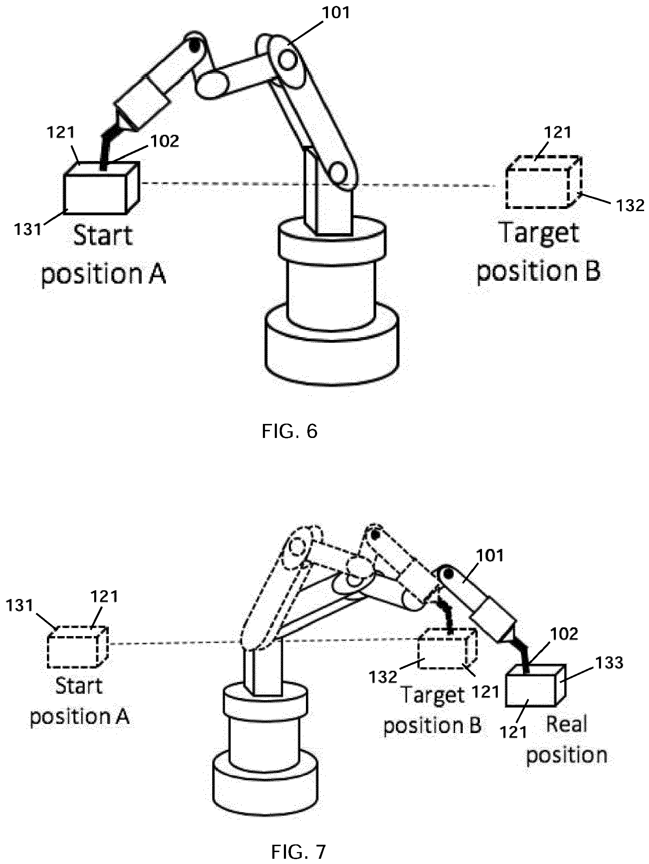

With reference to FIG. 6, a movement of an operated object 121 by a robot 101 is illustrated within a robot cell. In this simple example, the operated object 121 is moved from position A 131 to position B 132 by a grasping tool 102 on the end of the robotic arm 101. The robot 101 can be controlled by a robot controller and the initial trajectory of the operated object 121 in this example is a straight line. The movement of the operated object 121 can be identified as part of an assembly scenario which is forwarded to a motion planner which generates a motion script which controls the robot 101 to move the operated object 121 between position A 131 and position B 132.

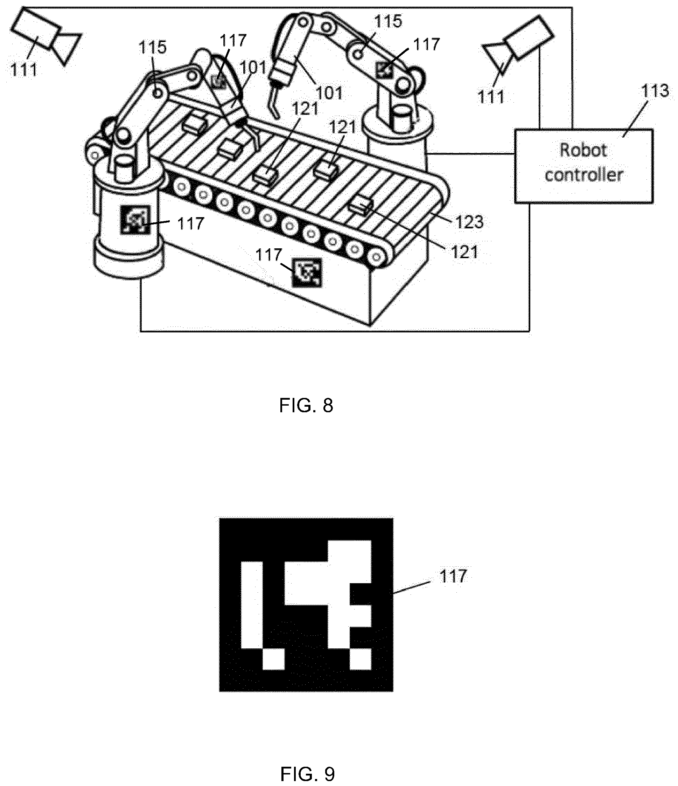

As discussed above, with reference to FIG. 4, the locations and orientations of the robots and operated object objects in the robot cell must be precisely determined. In an embodiment with reference to FIG. 8, the robotic environment can use markers 117 which can be used by the system for better identification of the locations and orientations of operated objects, robot layouts coordinates. The markers 117 can be applied to one or more points on the robots 101, the conveyor belt assembly 123, and operated objects 121. In an embodiment, the markers 117 can be ArUco code markers which can be used for determining the locations and orientations of the robotic systems using computer vision from the cameras 111. A C++ library can be used for detection of augmented reality markers. The library relies on the use of ArUco coded markers. Each marker may have a unique 2D barcodes (e.g., unique black and white patterns). Each ArUco marker 117 corresponds to an identifier which can be encoded into a small grid of black and white pixels. The ArUco markers 117 can be detected by the cameras and transmitted to the robot controller 113 which can include a processor running software. An ArUco decoding algorithm might be running on the processor of the robot controller 113, and can be capable of locating, decoding, and of estimating the pose location and rotational orientation in space of any ArUco markers 117 in the field of view of the cameras 111.

FIG. 9 illustrates an embodiment of an ArUco marker 117 which is a synthetic square marker composed of a wide black border and an inner binary matrix which codes its identifier. The black border facilitates its fast detection in the image and the binary codification allows its identification and the application of error detection and correction techniques. The marker grid determines the number of bits in the internal matrix. For instance, a marker grid of 4x4 is composed of 16 bits. When the markers 117 are photographed, the resulting image can include ArUco markers and the marker detection process returns a list of detected markers 117. Each detected marker can include the positions of the four corners in the marker 117 and the identification of the marker 117. The marker 117 detection process can include two main steps. 1) Detection of marker candidates. In this step the image is analyzed in order to find square shapes that are candidates to be markers 117. The analysis can begin with an adaptive thresholding to segment the markers 117, then contours are extracted from the threshold images and those that are not convex or not approximate to a square shape are discarded. 2) After the candidate marker 117 detection, the system can determine if the candidate markers are actually markers 117 by analyzing their inner codification. The marker bits of each marker are extracted by perspective transformation applied to obtain the marker in its canonical form. Then, the canonical image can be processed to be divided into different bits according to the marker size and the border size, and the number of black or white pixels on each bit is counted to determine if it is a white or a black bit.

In other embodiments, the location and rotational orientation of the robots 101, operated objects 121 and conveyor belt 123 can be determined without markers 117 using advanced computer vision algorithm implementations. In these embodiments, the cameras 111 can use the visible features on the robots 101, operated objects 121 and conveyor belt 123 instead of markers. In an embodiment, the cameras 111 can apply a photogrammetric process which can convert the photographs from the cameras 111 into 3D models of the robots 101, operated objects 121 and conveyor belt 123. All the dimensions, distances and object identification of the real robots 101, operated objects 121 and conveyor belt 123 can be done programmatically by the robot controller 113 to create virtual robots, virtual operated objects and virtual conveyor belts in virtual robot cells. The positions and orientations of the virtual robot cell components can be compared to the positions and orientations of the real robot cell components to determine the calibration of the robot cells. This can be done on an ongoing basis so that the robot cell is constantly improving its calibration.

General calibration can include object markers which are photographed, and the identifications, positions and orientations of the markers are detected by a marker algorithm when the photographs of the markers are processed. Each operated object in a robotic cell scene can be marked with a marker such as an ArUco marker. Commonly the marked objects can include robot arms, robot basement point, robot gripper, walls, cameras, ceiling, tables, automatic guided vehicles (AGVs), etc. The objects are identified by computer vision algorithm; dimensions and positions are measured. In an embodiment, the markers can be ArUco markers and the computer vision algorithm can analyze the ArUco marker which can result in an identification of the object associated with the ArUco marker. The acquired object parameters from the computer vision algorithm can also identify the coordinate position and angular position of the marker. The robot controller can use the position data to set up the coordinates of the real objects in the robot program and setup the coordinates of the operated objects in the virtual robot cell environment in a robot cell simulator. While it is possible to manually measure the locations and orientations of the operated objects using measuring tools such as a tape measure and laserm easures, this manual process is very impractical. A more automated measuring method will be m ore efficient.

In a pose calibration method, the operated objects can be photographed in a plurality of different poses. The system can perform pose calibration, control teaching and robot program initial setup. The number of pre-defined robot poses can be set sequentially. In an embodiment, the most critical poses from the operator standpoint can have specific characteristics such as: joints between assembled components that have an angle from 0 to 180 degrees, the last joint to 45 degrees, the two last joints to 45 degrees, movements where the floor is touched by a gripper robot arm, movements where an operated object is touched by the robot gripper, etc.

In a manual calibration process, the robot arm can be physically moved to the desired position by using a joy-stick or pushbuttons on a handheld device which controls the motors moving the robot. When desired orientation and position accuracy have been obtained, the position and orientation can be stored by the robot program running on the robot controller in a computer memory. This process is repeated until every position in the robot program has been taught and stored.

The robot controller can perform a simulated virtual environment calibration refinement and verification. Each pose from the calibration set of poses should be reproduced in the simulated virtual environment using values and commands from the robot program stored in memory. If deviations from the real robot arm and tool positions are determined by the robot controller, the corrections to the positions of the robot arms and tools can be introduced by the robot controller in the virtual robot cell simulator. As an alternative to the above described process, a fuzzy interpolation technique for determining positioning error compensation can be used by the robot controller 113.

The calibration process performed by the robot controller 113 in real environment should also be performed in a corresponding matching simulated virtual environment. One problem is that the last two steps could be quite effort consuming since they require very precise measurements and updates for each pose change. The same process should be repeated if equipment (cameras, robots, markers) positions change over time during the manufacturing.

An embodiment of the present disclosure addresses the above-described problems and provides a flexible automated approach for calibration of the robotic cell and simulated environment accordingly. The disclosure provides a solution for accurate modeling of the production environment. Though for concreteness of the explanations we consider the robotized factory use-case, the proposed design might be effectively used in many other cases and might have a variety of implementations. The setup of the general elements in the robotic cell scene must match in both real robot cell and virtual robot cell environments. The robot cell components including the robots, cameras, tooling and operated objects can be installed and markers can be placed on these robot cell components. As discussed, these markers can be ArUco markers or in other embodiments, the visible features of the components can be used rather than markers. In an embodiment, the series of robot joint poses is pre-defined (N_Poses-number of poses).

In this embodiment, the setup of the robot cell components is first done in the simulator and then the robot controlling software program is updated. The proposed scenario for improvement of the calibration refinement and verification includes initiating the movement of the virtual robot in a simulator robot cell. Initiation includes sending a G-code or other available robot control commands to the virtual robot in the virtual robot cell and creating sets of pictures with different pose positions of the robot arm in the virtual simulated robot cell environment. The pictures of the virtual components in the virtual robot cell are obtained by virtual cameras. For each pose in the plurality of virtual poses, the components and/or camera can be slightly altered. For example, each pose can have a slight change in the positions of the cameras, such as a change in the angles and/or locations of the cameras. The poses can have slightly changed positions of virtual markers, such as ArUco markers on the robot cell components. At the end of this stage, the virtual cameras will produce a series of virtual pictures for each virtual pose position of the virtual robot arm. The total number of virtual pictures taken of the virtual robot cell environment is: N_VirtualSnapshots = N_Poses*N_Cameras*N_CameraPositions*N_Markers *N_MarkerPositions

All the robot movements are recorded into the script/program for future re-play. The recorded G-code script is also executed in the corresponding real robot cell environment. Each pose of the robot is photographed with real cameras. At the end of the real robot pose snapshot stage the robot controller has real snapshots for each pose. The total amount of pictures taken of the real robot cell environment is N_RealSnapshots = N_Poses*N_Cameras. The robot controller can then compare each virtual snapshot to each real snapshot for each pose from N_Poses. The robot controller can then find the closest matching pair of virtual and real snapshot images. Once the closest virtual snapshot and real snapshot image pair are found, the robot controller can calculate the deviation between simulated positions of the cell components from the virtual robot cell and real robot cell. Various metrics could be used for comparison of simulated and real snapshot images, for example, simple mean square pixel error or mean square error in poses of detected markers, to some more sophisticated metrics such as image synthesis methods.

The detected image differences are applied to the simulator virtual robot cell as corrective coefficients or updates of the coordinates to specify the correct position of the virtual camera, virtual marker or virtual robot. If needed, this process can be repeated to obtain better virtual robot cell accuracy. The detected image differences are also applied to the control program of the real robot. The values of changed parameters can depend on the target precision of the calibration, which is needed to reach an acceptable accuracy. The position change of the calibrated object can be between 0-50 millimeters, the camera's angle change can be between 0-15 degrees. In an embodiment, the robot positioning errors (deviations) are calculated using parameters, taken from the real robot (joints' positions) and the same from the simulator.

If needed, the robot controller can perform coordinate system transformations during the calibration process. The robot controller can calculate errors in the operated objects positions using the virtual robot cell and real robot cell snapshot data obtained from the computer vision or image comparison algorithms. As discussed, the image data from simulated and real-world cameras are compared for a plurality of sets of snapshots. The sets of snapshots can include images at various adjusted positions of the cameras (real and virtual) as well as movement and/or rotation of the other operated objects in the robot cells. The position changes in the virtual environment can be done automatically according to the predefined script, for example some random position series could be defined.

During the real and virtual robot cell image comparisons, Artificial Intelligence (AI) image comparison algorithms might be used or the image comparisons might be performed by humans. The similarity of the virtual and real compared pictures can be quantified by some pre-defined settings on the robot controller program. In other embodiments, various metrics could be used for comparison of simulated and real robot cell images and the differences can be determined by simple mean square pixel error, mean square error or other suitable error detection methods. If the similarity is not satisfactory, the step of capturing real and virtual images of the robot cells can be repeated with smaller changes in the virtual environment. For example, instead of changing the positions of the real and the virtual cameras and objects by centimeters, the camera and object shift for the set of virtual positions can be changed by much smaller movements, such as millimeters.

If the robot cell is using markers on objects for position-based metric measurements, then to avoid calibration degradation, there should be one static marker object that corresponds to the center of the base coordinate system with a fixed position. The number and placement of markers on robot cell parts defining the position metrics should be sufficient to avoid other calibration degradations. For example, the number of markers should be sufficient to detect simultaneous displacement of different parts and cameras in the real and virtual robot cells.

In other embodiments, various other types of robots can be used with the system and simulated in a virtual robotic cell. The virtual environment automates the compensation of the position errors for calibration of the robotized environment and the robot software programing settings. The disclosure allows for optimizing the process of tuning the robotic cell environment and assures precise positioning in the assembly factory. The system can decrease the time of the positioning parameters alignment within the real and virtual environments. The system may also minimize the tasks needed for accurate compensation of robot cells compared with previously known methods. The disclosure can be applicable to any manufacturing environment and operated objects, which might be virtualized in a software simulation. The disclosure aims to further increase robotized product line effectiveness and decrease production cost ($/unit) via automated optimized motion script development and the reduction or elimination of the human involvement. In some means, the disclosure is based on existing technologies but suggests using them in combination that was not used before.

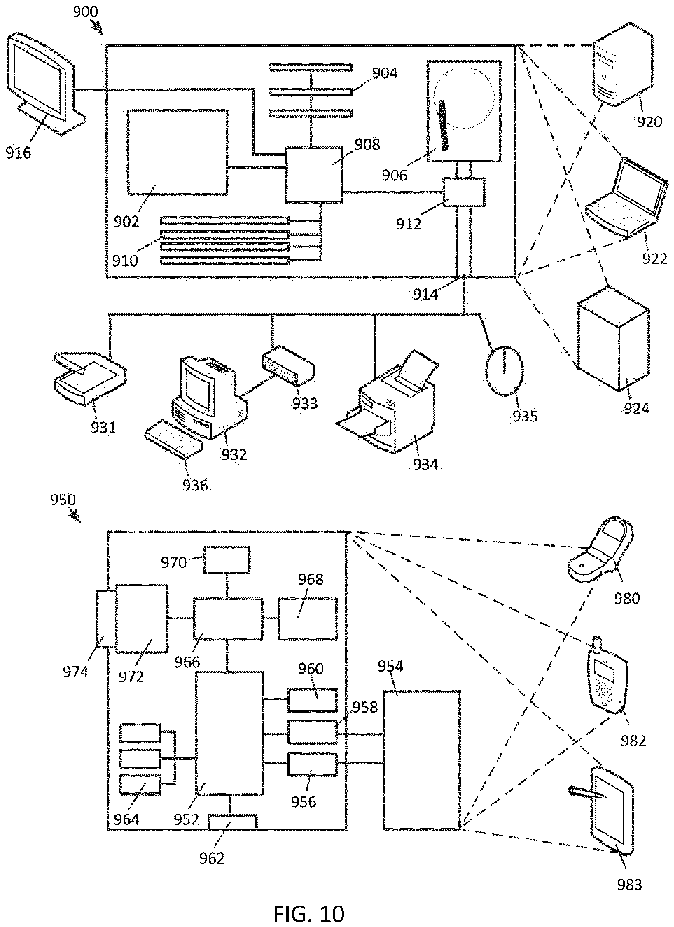

FIG. 10 shows an example of a generic computing device 900 and a generic mobile computing device 950, which may be used to implement the processes described herein, including the mobile-side and server-side processes for installing a computer program from a mobile device to a computer. Computing device 900 is intended to represent various forms of computers, such as laptops, desktops, workstations, servers, blade servers, mainframes, and other appropriate computers. Computing device 950 is intended to represent various forms of mobile devices, such as personal digital assistants, cellular telephones, smartphones, etc. The components shown here, their connections and relationships, and their functions, are meant to be exemplary only, and are not meant to limit implementations of the systems and methods described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components, processor 902, memory 904, storage device 906, high-speed interface 908, high-speed expansion ports 910, and low speed interface 912 are interconnected using various buses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. The memory 904 can be a volatile memory unit or units, or a non-volatile memory unit or units. Memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, a tape device, a flash memory, another similar solid state memory device, or an array of devices, including devices in a storage area network or other configurations. A computer program product can be tangibly embodied in an information carrier. The computer program product may also contain instructions that, when executed, perform one or more methods, such as those described above. The information carrier may be a non-transitory computer- or machine-readable storage medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is only for example. In one implementation, the high-speed controller 908 is coupled to memory 904, display 916 (e.g., through a graphics processor or accelerator), and to high-speed expansion ports 910, which may accept various expansion cards (not shown). In the implementation shown, low-speed controller 912 is coupled to storage device 906 and low-speed expansion port 914. The low-speed expansion port 914, which may include various communication ports (e.g., USB, Bluetooth, Ethernet, wireless Ethernet), may be coupled to one or more input/output devices, such as a keyboard 936 in communication with a computer 932, a pointing device 935, a scanner 931, or a networking device 933 such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with an additional storage device, such as a Microdrive, solid state memory, or other device. Each of the processor 952, memory 964, display 954, communication interface 966, and transceiver 968 are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 974 may also be provided and connected to device 950 through expansion interface 972, which may include, for example, a SIMM (Single In-Line Memory Module) card interface. Such expansion memory 974 may provide extra storage space for device 950, or may also store applications or other information for device 950. Specifically, expansion memory 974 may include instructions to carry out or supplement the processes described above, and may also include secure information. Thus, for example, expansion memory 974 may be provided as a security module for device 950, and may be programmed with instructions that permit secure use of device 950. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 974, memory on processor 952, or a propagated signal that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. Short-range communication may also occur, such as using a Bluetooth, Wi-Fi, or other such transceiver (not shown). In addition, GPS (Global Positioning System) receiver module 970 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smartphone 982, personal digital assistant, a tablet computer 983 or other similar mobile computing device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to exchange data and instructions with a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface (GUI) or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

The present disclosure, in various embodiments, includes components, methods, processes, systems and/or apparatus substantially as depicted and described herein, including various embodiments, sub combinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. Rather, as the following claims reflect, inventive aspects lie in less than all features of any single foregoing disclosed embodiment.

## Claims

1. A method for determining optimized robot motions comprising:
creating a plurality of motion scripts by a motion planner for technological operations of a robot on an operated object having an object weight;
transmitting the plurality of motion scripts from the motion planner to a motion optimizer;
executing the plurality of motion scripts in a virtual environment having a virtual robot and a virtual operated object by the motion optimizer running on a computer processor;
determining by the motion optimizer, criteria values for each of the plurality of motion scripts;
selecting by the motion optimizer an optimal motion script based upon the criteria values of each of the motion scripts;
transmitting the optimal motion script to a robot control system which has a robot controller; and
running the optimal motion script on the robot controller and transmitting control signals from the robot controller to the robot for processing the operated object.

2. The method of claim 1 further comprising:
providing real sensors for monitoring the robot;
recording real sensor data from the real sensors while the robot is operating with the optimal motion script;
analyzing the real sensor data by the robot controller;
determining errors in the movement of the robot or errors in the processing of the operated object; and
creating a plurality of revised motion scripts by the motion planner for revised technological operations of the robot on the operated object.

3. The method of claim 1 further comprising:
providing virtual sensors on the virtual robot;
recording virtual sensor data from the virtual sensors on the virtual robot while the virtual robot is operating with the optimal motion script;
analyzing the virtual sensor data by the robot controller; and
determining by the robot controller, that changes to the technological operations are required; and
transmitting by the robot controller, a correction request for the technological operations.

4. The method of claim 1 further comprising:
providing real sensors on the robot;
recording real sensor data from the real sensors on the robot while the robot is operating with the optimal motion script;
providing virtual sensors on the virtual robot;
recording virtual sensor data from the virtual sensors on the virtual robot while the virtual robot is operating with the optimal motion script;
comparing the real sensor data and the virtual sensor data by the robot controller;
determining by the robot controller, that changes to the technological operations are required; and
transmitting by the robot controller, a correction request for the technological operations.

5. The method of claim 1 wherein the criteria values include an accuracy value and the optimal motion script most accurately performs the technological operations of the robot on the operated object.

6. The method of claim 1 wherein the criteria values include a speed value and the optimal motion script most quickly performs the technological operations of the robot on the operated object.

7. The method of claim 1 wherein the criteria values include a safety check and the motion script performs the technological operations of the robot safely on the operated object.

8. The method of claim 1 further comprising:
determining virtual currents going to virtual motors in the virtual robot;
calculating electrical power consumed by the virtual robot for each of the motion scripts;
wherein the criteria values include a power efficiency value and the optimal motion script performs the technological operations of the robot on the operated object with the highest power efficiency value.

9. The method of claim 1 wherein the criteria values include a price per product value and the optimal motion script performs the technological operations of the robot on the operated object with the lowest price per product value.

10. The method of claim 1 wherein virtual inertia values for the optimal motion script are within predetermined inertia requirements.

11. The method of claim 1 further comprising:
determining an error in the optimal motion script based upon the operation of the robot with the optimal motion script;
determining revised technological operations of the robot on the operated object;
creating a plurality of revised motion scripts by the motion planner for revised technological operations of the robot on the operated object;
executing the revised motion scripts for the virtual motions of the virtual robot and the virtual operated object by the motion optimizer running on the computer processor in the virtual environment;
determining revised criteria values for the virtual robot for each of the revised motion scripts from revised virtual sensor data;
selecting a revised optimal motion script based upon the revised criteria values of each of the revised motion scripts wherein revised virtual inertia values for the revised optimal motion script are within predetermined inertia requirements; and
operating the robot with the revised optimal motion script.

12. The method of claim 1 further comprising:
determining by the robot controller, that changes to the technological operations of the robot are required; and
transmitting by the robot controller, a correction request for the technological operations.

13. The method of claim 1 further comprising:
creating a plurality of revised motion scripts by the motion planner for revised technological operations of the robot;
transmitting the plurality of revised motion scripts from the motion planner to the motion optimizer;
executing the plurality of revised motion scripts in the virtual environment;
determining by the motion optimizer, criteria values for each of the plurality of revised motion scripts;
selecting by the motion optimizer a revised optimal motion script based upon the criteria values of each of the revised motion scripts;
transmitting the revised optimal motion script to the robot control system; and
running the revised optimal motion script on the robot controller and transmitting control signals from the robot controller to the robot for processing the operated object.

14. The method of claim 1 further comprising:
creating a plurality of revised motion scripts by the motion planner for technological operations of the robot on a revised object having a revised object weight;
transmitting the plurality of revised motion scripts from the motion planner to the motion optimizer;
executing the plurality of revised motion scripts in the virtual environment;
determining by the motion optimizer, criteria values for each of the plurality of revised motion scripts;
selecting by the motion optimizer a revised optimal motion script based upon the criteria values of each of the revised motion scripts;
transmitting the revised optimal motion script to the robot control system; and
running the revised optimal motion script on the robot controller and transmitting control signals from the robot controller to the robot for processing the operated object.

15. The method of claim 1 further comprising:
creating a plurality of second motion scripts by the motion planner for the technological operations of a second robot on the object having the object weight;
transmitting the plurality of second motion scripts from the motion planner to a motion optimizer for the second robot;
executing the plurality of second motion scripts in the virtual environment having a second virtual robot and the virtual operated object by the motion optimizer running on the computer processor;
determining by the motion optimizer, criteria values for each of the plurality of second motion scripts;
selecting by the motion optimizer a second optimal motion script based upon the criteria values of each of the second motion scripts;
transmitting the second optimal motion script to the robot control system; and
running the second optimal motion script on the robot controller and transmitting control signals from the robot controller to the second robot for processing the operated object.
